# EUROPEAN PATENT APPLICATION

(11) **EP 2 211 224 A1**
(43) Date of publication of application: **28.07.2010**
(21) Application number: 09305073.0
(22) Date of filing: 27.01.2009
(51) Int. Cl.: G02B 27/01, G06F 3/01

(54) **Head-mounted display and operating method thereof**

(71) Applicant: Thomson Licensing SA, 92443 Issy-les-Moulineaux Cedex (FR)
(72) Inventor: Winter, Marco, 30659, Hannover (DE)
(74) Representative: Lindemann, Robert

(57) **Abstract**

A method of displaying images in a head-mounted display (HMD) (6) comprises the steps of transmitting to the HMD (6) a sequence of image frames (5) which are too large to fit on a screen (11) of the HMD (6), and selecting a portion (151, 15r) of the image frame (5; 131, 13r) to be displayed on said screen (11) of the HMD (6) based on selection information.

## Description

The present invention relates to a head-mounted display for displaying moving images to a user, and to a method of operating such a display.

Head-mounted displays (or HMDs for short) are becoming increasingly popular for allowing a user to immerge in a virtual environment, since, in contrast to a conventional stationary computer monitor, an HMD can generate images which fill the user's entire field of view or at least a substantial portion of it, even if the user turns his head. A problem is that whenever the user moves his head, he expects the images he is seeing in the HMD to move accordingly. If they do, the user can be conveyed a very realistic notion of a virtual environment. If they do not, disorientation and equilibrium problems may result.

Head-mounted displays have been used for simulating various types of virtual environment. For example, ancient buildings or historical towns have been virtually reconstructed, so that the user of a HMD can take a virtual walk through these and see how these looked like in past centuries. In such an environment, there is no need for a user to move fast, and he can adapt the speed of his movements to the speed at which the images he sees in the HMD react to his movements. Other types of virtual environments, in particular realistic training environments for military, police, firemen, in short, for all kinds of persons who are regularly confronted with highly dangerous situations in which life may depend on the ability to react quickly and appropriately, require an ability of the HMD to adapt the images displayed by it very quickly to a movement of the user. In applications of this type, a user is likely to move or turn his head very quickly when he perceives some kind of menace which is outside his current field of view, and an adapted image must be available within fractions of a second. The same requirements apply to HMDs used in video games.

Modern personal computers with dedicated graphics accelerator hardware can calculate images of a virtual environment adapted to a user's position in that environment with reasonably small delays. However, a bottleneck that must be overcome is transmission of these images to the HMD. Transmission of images should be wireless, so that no cables obstruct the user's movements. Further, it should occupy as little bandwidth as possible, so that a receiver in the HMD can be lightweight and does not require impractically heavy batteries.

According to the present invention, this problem is solved on the one hand by a method of displaying images in a HMD comprising the steps of transmitting to the HMD a sequence of image frames which are too large to fit on a screen of the HMD, and selecting a portion of the image frame to be displayed on said screen of the HMD based on selection information.

In order to describe properly any possible change of perspective of a user wearing the HMD, six fundamental data items relating to the three degrees of freedom of translation and the three degrees of freedom of rotation are sufficient. For the transmission of these data, much less bandwidth is required than for the transmission of the image frames. As long as a change of perspective is small enough, so that a new field of view resulting from this change is still available in the large image frame previously transmitted to the HMD, a realistic new view can be derived without the need to transmit a new image frame. Therefore, the speed at which displayed images in the HMD can be updated is not limited by the rate at which image frames are transmitted to the HMD.

In most practical cases, the selection information will be derived from a detected movement of the HMD, i.e. from a movement of its wearer. Of course, situations are conceivable in which the selection information is derived from other sources, e.g. if the user is assumed to be riding a virtual vehicle, the position and direction of which can suddenly change without the user moving his head. In this case, if the rendering engine cannot react quickly enough to provide according new images, the modified field of view could be provided by shifting the selected portion in the HMD. This also advantageously allows for using the internal shifting in the HMD for the transition phase, while the rendering engine of the source computer skips the intermediate positions of the transition phase and only needs to provide images for the new end position resulting from the sudden change.

Practical embodiments of the method may vary in the way in which different types of movements are handled. In an elementary embodiment, the detected movement is at least a rotation of the HMD around an axis which is perpendicular to an optical axis of the HMD. In this case, the portion selected for display may simply be displaced in the image frame, the amount and direction of the displacement depending on the detected amount of rotation and the orientation of the axis of rotation. In this way, a turn of the user's head to the left or right, up or down can be taken account of with a high degree of realism.

Another case is a rotation of the user's head around an axis parallel to the optical axis of the HMD. Since such rotations tend to be small compared to rotations around axes perpendicular to the optical axis of the HMD, they can simply be neglected, whereby the amount of processing power which has to be implemented in the HMD can be reduced.

Alternatively, the selected portion may be rotated in the image frame based on the detected amount of rotation of the HMD.

A displacement of the user cannot be compensated as perfectly as a rotation, since in the displacement new objects can enter the user's field of view or can disappear from it. Nevertheless, as long as the displacement is not too large, an approximate compensation is feasible. If the displacement is in a direction perpendicular to the optical axis of the HMD, the portion selected for display can be displaced in said image frame based on the amount and direction of displacement detected, similar to the compensation of the rotation. A displacement along the optical axis of the HMD can be compensated by determining the size of the selected portion of the image frame based on the amount of displacement detected.

Since a new image frame is preferably transmitted to the HMD at regular time intervals, the discrepancy between the motion compensated image displayed to the user and an image calculated based on current position and viewing direction of the user will not become too large.

If the resolution of at least part of an image frame transmitted to the HMD is higher than the resolution of the screen, aliasing errors can be reduced which otherwise are likely to occur when the selected portion is displaced in the image frame or when its size is changed.

In order to economize transmission bandwidth, image frames transmitted to the HMD may have less resolution in a peripheral region than in their centre. This takes account of the fact that a viewer's attention will be focussed to the centre of the screen most of the time. If something occurs in a peripheral region of the screen which catches the user's attention, he is likely to turn his head into that direction, so that whatever aroused his interest moves to the centre of the screen, where it will be displayed in detail at least when a new image frame is transmitted to the HMD.

In order to reduce aliasing errors when displacing the portion of the image selected for display, it may be helpful to transmit image frames to the HMD in a frequency domain transformed form. Based on this form, brightness and/or or colour values can be calculated with a same degree of exactness at any coordinate of a transmitted frame, regardless of whether the coordinate value fits a given raster or not.

For image generation on the screen of the HMD, it is convenient to have at least the selected portion of the image frames stored in the HMD in a space-transformed form. If the transmitted images are space-transformed, they should be stored completely in this form. If the transmitted frames are frequency-transformed, the only space transform which needs to be stored it that of the selected portion alone, since whenever the position or orientation of the HMD is changed, the selected portion has to be recalculated from the stored frequency-transformed image frame.

The object of the invention is further achieved by a head-mounted display having receiving means for receiving image frames from a video information source, storage means for received video frames, a screen for displaying images and a video control processor for selecting a portion of a stored video frame based on received selection information and for displaying said selected portion on said screen.

Preferably, such a display further comprises at least one motion sensor for providing the selection information.

Further features and advantages of the present invention will become apparent from the subsequent description of its preferred embodiments, referring to the appended drawings.
- Fig. 1: is a block diagram of a virtual reality system embodying the present invention;
- Fig. 2: is a diagram schematically illustrating the relationship between image frames transmitted to the HMD and what is displayed on a screen of the HMD;
- Fig. 3: is a diagram analogous to Fig. 2 illustrating changes of the displayed portion of the image frame in case of the user turning his head about a vertical axis;
- Fig. 4: illustrates the relation between displayed images and transmitted image frames in case of the user turning his head around a horizontal axis;
- Fig. 5: illustrates changes of the displayed image portion in case of the user moving forward; and
- Fig. 6: illustrates regions of an image frame according to an embodiment of the invention.

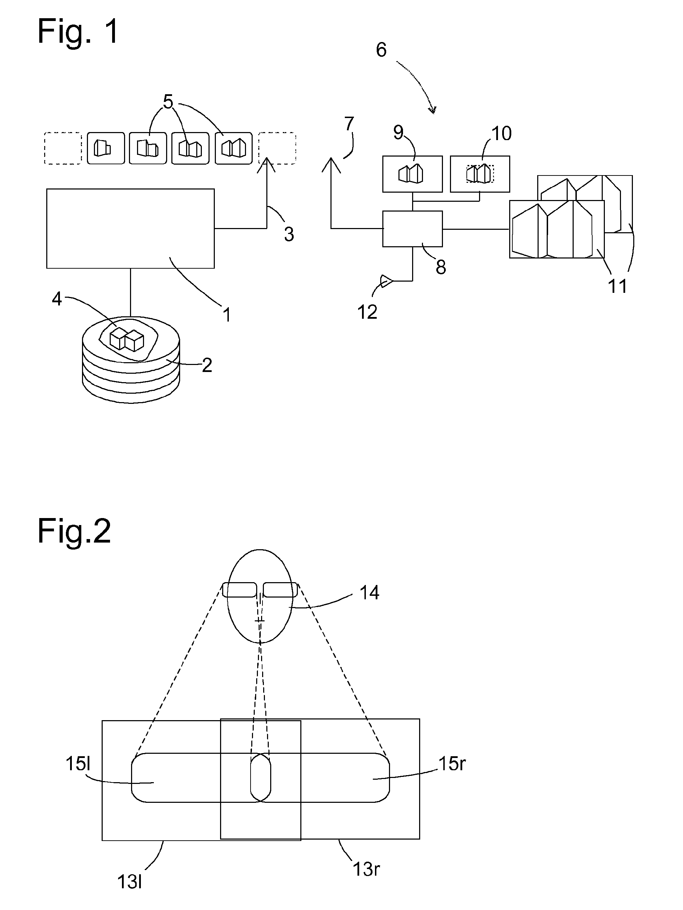

The virtual reality system of Fig. 1 comprises a computer 1, which may comprise a graphics accelerator card, and which is connected to a database 2 and to a radio interface 3. The database 2 stores data of a three-dimensional model 4 of a virtual environment for a user to move in. Based on data describing the user's position in the virtual environment and his viewing direction, computer 1 calculates at regular time intervals image frames representing what the user would see in the virtual environment. In most practical environments, these image frames 5 will be calculated assuming a central perspective with the viewer's eyes at the centre. In the present embodiment, image frames are calculated by pairs, one image frame for each of the user's eyes, taking into account the slightly different perspectives of the two eyes, so that a user who views the two image frames simultaneously, one with his right eye and the other with his left eye, can get a three-dimensional notion of the virtual environment. It is understood, though, that the principles of the present invention are also applicable to a system where single images are generated at a time.

At regular time intervals, the calculated image frames 5 are transmitted by radio to an HMD 6. The HMD 6 comprises a second radio interface 7 for receiving the image frames from computer 1, an image processor 8, storage blocks 9, 10 and two screens 11 on which a selected portion of each image frame 5 is displayed.

The HMD is provided with sensors 12, e.g. with a set of six accelerometers for detecting accelerations in three orthogonal directions at two different locations. Based on the output of these sensors 12, rotations and displacements of the HMD 6 are calculated in image processor 8 and fed back by radio to computer 1. Based on these position data, computer 1 continuously determines a current position and viewing direction of the user in the virtual environment, based on which the image frames 5 are calculated.

In general, it cannot be predicted reliably in which direction a user will turn his head or move next. In particular in a virtual environment simulating dangerous situations, such as a training environment for military or firemen or video game users tend to move abruptly and erratically. Whenever the user moves, a new image frame adapted to the user's current position becomes available at the HMD 6 only with a noticeable delay, part of which is due to the time needed by the computer for calculating the updated image frame, and another part of which is due to the time needed for radio transmission to the HMD 6. If what the user sees in the HMD 6 does not match his movements, serious irritation and equilibrium problems may result. If the user is too occupied coping with irritations due to excessive latency of the images in the HMD, he is likely not to react properly to stimuli presented to him in the virtual environment. In order to provide a realistic training situation in a virtual environment, it is extremely important to reduce latency times between a user's movement and the corresponding changes appearing in the images on the HMD screens 11 as far as possible.

At first sight it is surprising that this problem can be solved by transmitting from computer 1 to HMD 6 image frames 5 with a field of view which is actually substantially larger than the field of view of a user, i.e. than the images actually appearing on the screens 11, since the time required for transmitting such an image frame can only be longer than the time for transmitting exactly the images that will be displayed.

The relation between image frames 5 and the images displayed on screens 11 is symbolically illustrated in Fig. 2. While rectangles 131, 13r are image frames calculated by computer 1 for left and right eyes of a user 14, what is actually displayed to the user 14 on the screens 11 is just a portion of rectangles 13l, 13r, represented by small, rounded rectangles 15l, 15r. It is to be noted that the pixels in the overlapping portions of rectangles 131, 13r are not necessarily identical, because the viewing angle for the left and the right eye may result in different pixels for each respective eye, irrespective of apparently overlapping pixel positions.

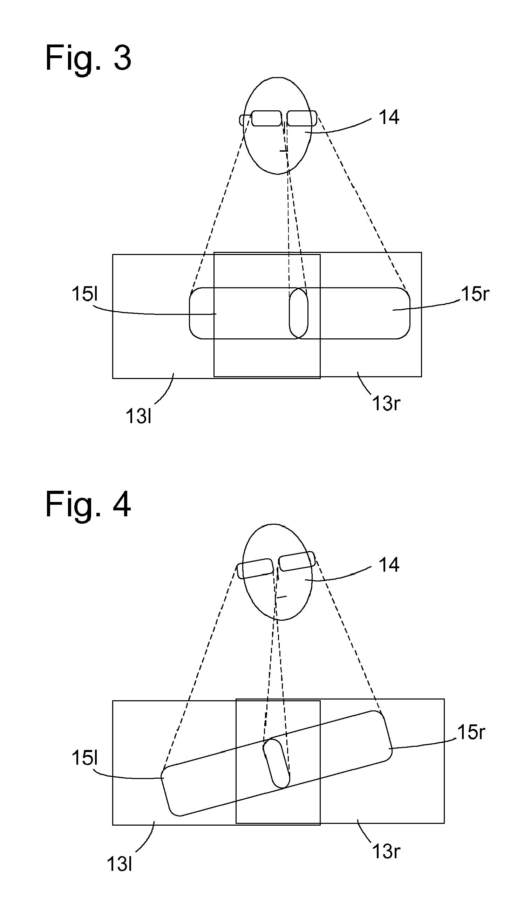

Supposing that the user suddenly turns his head to the right, as illustrated in Fig. 3, his field of view changes. The image processor 8 derives direction and extent of the rotation from data from the sensors 12, and displaces to the right the portions 15l, 15r of rectangles 131, 13r which are actually displayed on the screens 11.

Since the newly selected portions 15l, 15r are within the confines of the current image frame, all image data the image processor 8 needs for displaying the newly selected portions 15l, 15r are already stored in HMD 6, and the image processor can adapt the images on the screens 11 by itself, without having to wait for the transmission of a new image frame. Therefore, the displayed images on screens 11 can adapt extremely quickly to any turn of the user's head, and an irritation of the user by a mismatch between what he would expect to see based on his movements and what he actually gets to see can be avoided. Since the adaptation of the images on screens 11 does not require generation and transmission of new image data from computer 1, the rate at which the computer 1 calculates new images can be rather low, and bandwidth requirements for the radio transmission is low in spite of the large size of each image frame.

Similarly, if the user 14 turns his head not around an axis parallel to the image screens 11, but perpendicular thereto, the change of perspective of the user can be compensated by image processor 8 by rotating the rectangles 15l, 15r in their respective image frames, as illustrated in Fig. 4. Such a rotation involves a two-dimensional matrix rotation and does not impose an excessive processing load on image processor 8.

If the image frames 5 are calculated in computer 1 using a central perspective, a rotation of the user's head can thus be compensated perfectly by displacing and/or rotating the selected rectangles 15l, 15r within the image frames 131, 13r. What is actually shown on the screens 11 is identical to what would have been obtained by re-calculating an entire image frame in the computer, so that the same level of realism and image quality is achieved in both cases.

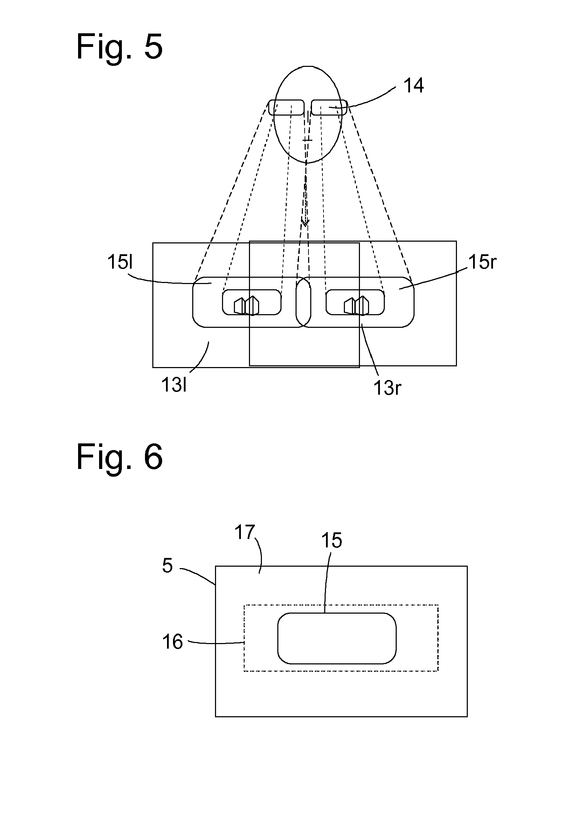

If the user moves forward quickly, this will be detected by the sensors 12 of HMD 6, too. In such a case, the image processor 5 reduces the size of the rectangle 15l, 15r in each image screen, e.g. from image portions 15r, 15l in Fig. 5 to 15r', 15l', as shown in Fig. 5. By displaying the reduced-size image portions 15r', 15l' so as to fill completely the screens 11 of HMD 6, the illusion can be created that the user is approaching the objects shown in these image portions, similar to the effect of a zoom lens in cinematography.

When the user is moving in the virtual environment perpendicular to his line of sight, the movement can also be compensated approximately by displacing the image portions 15l, 15r to be displayed within the image frames. The closer an object is to an observer, the faster it moves through the observer's field of sight. Therefore the relation between the speed at which the user 14 moves and the speed at which the selected image portions 15l, 15r are displaced is variable. For determining this relation the computer 1 transmits to image processor 8 the distance of the most relevant object in displayed image portions 15l, 15r, i.e. the object which the user is most probably watching, and the image processor 8 sets the ratio between the speed of the user and that of the selected image portions 15l, 15r such that this object appears to move smoothly when switching from one image frame to the next. Objects which are farther away from the user than the selected object will appear to move faster than real when the displayed image portions 15l, 15r are displaced, and will jump backwards when the HMD begins to display a new image frame. Objects which are closer move too slowly while the image portions 15l, 15r are displaced, and jump forward when switching to a new image frame. If the rate at which new image frames are transmitted to the HMD is high enough, this effect will cause objects which are closer to the user than the selected object or farther away to appear somewhat blurred in the user's direction of travel.

The situation is different in case of a displacement of the user in the direction of his line of sight. Such a movement is compensated by a change of size of rectangles 15a, 15b. The smaller these rectangles become, the coarser are the images displayed on the screens 11. Further, perspective errors arise because not all objects in the user's field of view are at the same distance. This is not a crucial issue, however: since the image frames 5 are re-calculated from model 4 at regular intervals, discrepancies between a "zoomed" image and what a user would really see at his current position can be kept at a tolerable level. Further, image defects which would conventionally result from the fact that at the time a newly calculated image frame is received at the HMD, the user is no longer at the position for which the image frame was calculated, can be compensated by appropriately "zooming" the displayed image portions 15l, 15r of a newly received image frame even before these are displayed for the first time.

The image frames 5 may be transmitted to the HMD 6 in the form of pixel images. An image for display on screens 11 can then be obtained by calculating, for each pixel of the screens 11l, 11r, a coordinate of a corresponding point in the transmitted image frames 5 and interpolating brightness and colour at the thus determined coordinate point between brightness and colour values of adjacent pixels of the transmitted image frame. If the pixel pitch in the image frames 5 and the displayed portions 15l, 15r selected from these was identical, the problem would arise that the contrast of the displayed images might vary depending on whether the pixels of the displayed image portions coincide with pixels of the image screens or whether they are interpolated. The invention avoids this by generating the image frames 5 at a noticeably higher resolution than that of the displayed images.

Of course, the higher the resolution and the larger the field of view of the image frames 5 is, the longer is the time needed for transmitting an image frame to HMD 6. Accordingly, there is a conflict that on the one hand would be desirable to transmit image frames 5 having as large a field of view as possible, so that large movements of the HMD 6 can be properly compensated for without having to wait for transmission of a new image frame, on the other hand the rate at which the image frames 5 can be updated is the lower, the larger the amount of data of a single image frame is. As a compromise between these two requirements, an embodiment is suggested in which, as illustrated in Fig. 6, the resolution in a central region 16 of each image frame 5 is higher than in a peripheral region 17 thereof. Accordingly, as long as the user does not move substantially, the image portion 15 displayed on a screen 11 will be taken from the high resolution region 16 in the centre of each image frame 5 and will appear on screen 11 with a good image quality. On the other hand, if the movement of HMD 6 is large, at least part of displayed region 15 will not fit into the high resolution region 16, and at last part of the image on screen 11 will have a reduced resolution. In practice, this is not a substantial disadvantage, since whenever the user moves his head so fast that part of the low resolution region 17 of an image frame 5 is displayed on the screen 11, it can be assumed that the user does not have the time to watch out for details and will hardly notice the reduced resolution before an updated image frame 5 is transmitted where currently displayed region 15 fits neatly into the high resolution region 16.

As shown in Fig. 6, the image frame 5 and the high resolution region 16 at its centre may have different aspect ratios. In particular in an application where incidents which require the user's attention are more likely to happen to the user's left or right than above or below him, it may be useful to have a high resolution region 16 with a flatter aspect ratio than the image frame 5 and the display screen 11. In that way there is a high probability that if the user abruptly turns his head to the left or right, the resulting field of view can be displayed to him with a high resolution, whereas in the less likely event that he has to look up or down, there is a higher probability that part of low resolution region 17 is displayed.

In a preferred embodiment, the image frames 5 are transmitted to the HMD 6 not as a pixel image but in a frequency-domain transformed form, e.g. as a Fourier transform or a cosine transform. For display on the screens 11, the image frames 5 have to be transformed back into the space domain. By appropriately setting the parameters for the transform into space domain, brightness and colour values can be obtained directly for each pixel of the screens 11, and there is no more need to interpolate.

If the image frames 5 are transmitted to the HMD 6 in frequency-domain form, one of the two storage blocks 9, 10 of HMD 6 is used for storing entire image frames in frequency-domain form and the other for storing image data of a selected portion of each image frame in space domain form. These space domain data are re-calculated from the frequency-domain data whenever the sensors 12 detect a movement of the HMD 6.

It is to be noted that the image frames are not necessarily arranged on a planar surface, as shown in figures 2 to 5. They may as well be arranged on the inner surface of a cylinder, as shown in figure 7, with the observer's head centred on the Z-axis. In this case a rotation of the observer's head only requires shifting the frames, while the perceived distance of the pixels remains constant. The actual resolution in the left and right outer image areas of each image is the same as in the centre areas and requires no additional interpolation for compensating distortions due to changes in the perspective.

It is also possible to virtually project the images on the inner surface of a sphere, with the observer's head centred in the centre of the sphere. In this case a rotational movement up or down as well as left or right can be accommodated by simply accordingly shifting the images. Consequently the vertical and horizontal resolution would be constant across the whole image, not requiring any interpolation towards the any of the borders of the image.

## Claims

1. A method of displaying images in a head-mounted display (HMD) (6) comprising the steps of transmitting to the HMD (6) a sequence of image frames (5) which are too large to fit on a screen (11) of the HMD (6), and selecting a portion (15l, 15r) of the image frame (5; 131, 13r) to be displayed on said screen (11) of the HMD (6) based on selection information.

2. The method of claim 1, wherein the selection information is updated at a higher rate than the image frames (5).

3. The method of claim 1, further comprising the steps of detecting a movement of the HMD (6) and deriving the selection information from the detected movement.

4. The method of claim 3, wherein the detected movement is at least a rotation of the HMD (6) around an axis which is perpendicular to an optical axis of the HMD, and wherein the selected portion (15l, 15r) is displaced in said image frame (131, 13r) based on the detected amount of rotation and the orientation of the axis of rotation.

5. The method of claim 3 or 4, wherein the detected movement is at least a displacement in a direction perpendicular to an optical axis of the HMD, and wherein the selected portion (15l, 15r) is displaced in said image frame (131, 13r) based on the amount and direction of displacement detected.

6. The method of any of claims 3 to 5, wherein the detected movement is at least a rotation of the HMD (6) around an axis which is parallel to an optical axis of the HMD (6), and wherein the selected portion (15l, 15r) is rotated in said image frame (13r, 131) based on the amount of rotation detected.

7. The method of any of claims 3 to 6, wherein the detected movement is at least a displacement along an optical axis of the HMD, and wherein the size of the selected portion (15l, 15l', 15r, 15r') of the image frame (131, 13r) is determined based on the amount of displacement detected.

8. The method of any of the preceding claims, wherein the resolution of at least part of an image frame (131, 13r) transmitted to the HMD (6) is higher than the resolution of the screen (11).

9. The method of any of the preceding claims, wherein image frames (5) are transmitted to the HMD having less resolution in a peripheral region (17) than in their centre (16).

10. The method of any of the preceding claims, wherein image frames (5) are transmitted to the HMD in a frequency-domain transformed form.

11. The method of any of the preceding claims, wherein at least the selected portions (15l, 15r) of the image frames (131, 13r) are stored in the HMD (8) in a space-transformed form.

12. A head-mounted display (6) having receiving means (7) for receiving image frames (5) from a video information source (1), storage means (9, 10) for received video frames, a screen (11) for displaying images and a video control processor (8) for selecting a portion (15l, 15r) of a stored video frame (131, 13r) based on received selection information and for displaying said selected portion (15l, 15r) on said screen (11).

13. The head-mounted display of claim 12, further comprising at least one motion sensor (12) for providing said selection information.
